# EUROPEAN PATENT APPLICATION

(11) **EP 4 708 859 A1**
(43) Date of publication of application: **11.03.2026**
(21) Application number: 24814204.4
(22) Date of filing: 17.05.2024
(51) Int. Cl.: H04N 19/176

(54) **IMAGE PROCESSING METHOD, APPARATUS AND SYSTEM AND STORAGE MEDIUM**

(30) Priority: 26.05.2023 CN 202310611801
(71) Applicant: Shenzhen Huawei Cloud Computing Technologies Co., Ltd., Shenzhen, Guangdong 518129 (CN)
(72) Inventor: LIU, Tianyi, Shenzhen, Guangdong 518129 (CN); SHI, Ziliang, Shenzhen, Guangdong 518129 (CN); LIU, Xiao, Shenzhen, Guangdong 518129 (CN)
(74) Representative: Gill Jennings & Every LLP
(86) International application number: PCT/CN2024/093850
(87) International publication number: WO 2024/245004

(57) **Abstract**

This application relates to an image processing method, apparatus, and system, and a storage medium, and relates to the field of video coding technologies. In this application, a server acquires a first image; then divides the first image into a plurality of pixel blocks and determines a sub bit rate of each pixel block; and finally compresses the first image based on a plurality of sub bit rates of the plurality of pixel blocks. Each pixel block includes a plurality of pixels in the first image, and the sub bit rate of each pixel block is determined based on an area of each pixel block and a quantity of pixels included in each pixel block. In this application, when a channel bandwidth between the server and a terminal device is limited, that is, when a target bit rate of the first image is fixed, sub bit rates of different pixel blocks of the first image can be determined based on the pixels included in each pixel block, to improve image quality of the compressed first image, and reduce a waste of computing power of the server in a process of rendering the first image.

## Description

This application claims priority to Chinese Patent Application No. 202310611801.0, filed with the China National Intellectual Property Administration on May 26, 2023 and entitled "IMAGE PROCESSING METHOD, APPARATUS, AND SYSTEM, AND STORAGE MEDIUM", which is incorporated herein by reference in its entirety.

### TECHNICAL FIELD

This application relates to the field of video coding technologies, and in particular, to an image processing method, apparatus, and system, and a storage medium.

### BACKGROUND

Cloud image rendering (cloud 3D rendering applications, cloud 3D) means that rendering is performed by using a rendering application deployed in a server to obtain an image, and then the server performs bit rate allocation on the image, compresses the image, and then sends the compressed image to a terminal device of a user. The bit rate allocation means allocating different numbers of bits respectively to different regions of the image. To adapt to a limited channel bandwidth between the server and the terminal device, a manner in which the server compresses the rendered image is usually lossy compression. However, because all regions of the image are compressed at same or similar bit rates, quality of each region in the compressed image is lower than quality of the rendered image. This results in a waste of computing power consumed by the server during image rendering, and results in poor quality of the image obtained after lossy compression, making it difficult to meet use requirements of users.

### SUMMARY

Embodiments of this application provide an image processing method, apparatus, and system, and a storage medium, to reduce a waste of computing power consumed for image rendering, and improve quality of a compressed image.

To achieve the foregoing objectives, according to a first aspect, an embodiment of this application provides an image processing method, including: acquiring a first image; then dividing the first image into a plurality of pixel blocks, and determining a sub bit rate of each pixel block; and finally compressing the first image based on a plurality of sub bit rates of the plurality of pixel blocks. Each pixel block includes a plurality of pixels in the first image, and the sub bit rate of each pixel block is determined based on an area of each pixel block and a quantity of pixels included in each pixel block. According to the method provided in this application, when a channel bandwidth between a server and a terminal device is limited, that is, when a target bit rate of the first image is fixed, sub bit rates of different pixel blocks of the first image can be determined based on the area of each pixel block and the quantity of the pixels included in each pixel block, thereby improving image quality of the compressed first image, and reducing a waste of computing power of the server in a process of rendering the first image.

In a possible implementation of the first aspect, determining the sub bit rate of each pixel block includes: determining a picture quality level of each pixel block based on the area of each pixel block and the quantity of the pixels included in each pixel block, where the picture quality level represents a degree of dispersion between luminance values corresponding to the plurality of pixels in each pixel block; and determining the sub bit rate of each pixel block based on a target bit rate of the first image and the picture quality level of each pixel block. According to the method provided in this application, the picture quality level of each pixel block is determined based on the degree of dispersion between the luminance values corresponding to the plurality of pixels in each pixel block, and different numbers of bits are allocated to all the pixel blocks based on the picture quality level and the target bit rate of the first image. In this way, when a channel bandwidth between the server and the terminal device is limited, image quality of the compressed first image is improved, and a waste of computing power of the server in a process of rendering the first image is reduced.

In a possible implementation of the first aspect, determining the picture quality level of each pixel block includes: determining a luminance value of each pixel in the first image; determining a luminance variance value of the plurality of pixels included in each pixel block; and determining the picture quality level of each pixel block based on the luminance variance value. According to the method provided in this application, the luminance variance value of each pixel block of the first image is determined, so that the picture quality level of each pixel block can be determined based on the luminance variance value, and therefore the sub bit rate of each pixel block of the first image can be determined based on the picture quality level of each pixel block.

In a possible implementation of the first aspect, the picture quality level of each pixel block includes a first level, a second level, or a third level; the first level indicates that the luminance variance value of each pixel block is less than or equal to a first threshold; the second level indicates that the luminance variance value of each pixel block is greater than the first threshold and less than a second threshold, where the second threshold is greater than the first threshold; and the second level indicates that the luminance variance value of each pixel block is greater than or equal to the second threshold. According to the method provided in this application, the first threshold and the second threshold are set, and a plurality of picture quality levels are determined based on the first threshold and the second threshold, so that division of the picture quality level of the pixel block is implemented at finer granularity, thereby implementing allocation of bit rates to all the pixel blocks based on different picture quality levels.

In a possible implementation of the first aspect, different picture quality levels are respectively associated with different bit allocation weights, the picture quality level is positively correlated with the bit allocation weight, and determining the sub bit rate of each pixel block based on the target bit rate of the first image and the picture quality level of each pixel block includes: determining a bit allocation weight corresponding to each pixel block in the first image based on the picture quality level of each pixel block; and determining the sub bit rate of each pixel block based on the target bit rate of the first image and the bit allocation weight corresponding to each pixel block. According to the method provided in this application, different bit allocation weights are configured for different picture quality levels, so that the sub bit rate of each pixel block can be determined based on the picture quality level of each pixel block of each frame of image.

In a possible implementation of the first aspect, acquiring the first image to be processed includes: acquiring a plurality of frames of source images to be processed; and rendering the plurality of frames of source images to obtain a plurality of frames of rendered images, where a rendering manner includes performing at least one of a rendering process of a rendering application or artificial intelligence generated content (AI generated content, AIGC), and the plurality of frames of rendered images include the first image. According to the method provided in this application, rendering may be performed in a plurality of manners to obtain the first image, so that use requirements of users in different use scenarios can be met.

In a possible implementation of the first aspect, the plurality of frames of source images include a first source image and a second source image, the first source image corresponds to the first image, the second source image is adjacent to the first source image, and a timestamp of the second source image is after a timestamp of the first source image; and rendering the plurality of frames of source images to obtain the plurality of frames of rendered images includes: determining a rendering manner of each pixel block in the second source image based on the picture quality level of each pixel block in the first image, where corresponding rendering manners are configured for different picture quality levels, and the picture quality level is positively correlated with rendering precision of the rendering manner corresponding to the picture quality level; and rendering the second source image in the rendering manner of each pixel block in the second source image to obtain the second image. According to the method provided in this application, during image rendering, the rendering manner of each pixel block on the second image is determined based on the picture quality level corresponding to each pixel block of the first image, and finally rendering is performed to obtain the second image. Cooperation between an image rendering process and an image compression process is implemented. To be specific, based on the picture quality level corresponding to each pixel block of the first image, rendering of different regions of the second image with different fineness is implemented, and different numbers of bits are allocated to different regions of the first image. In this way, when a channel bandwidth between the server and the terminal device is limited, image quality of the compressed image can be improved, and a waste of computing power consumed by the server during image rendering can be reduced.

In a possible implementation of the first aspect, the method further includes: generating a bit stream based on a plurality of frames of compressed images when each of the plurality of frames of images is rendered and compressed; and sending the bit stream. According to the method provided in this application, in a cloud image rendering scenario with a limited channel bandwidth, image quality of the plurality of frames of images included in the bit stream can be improved, thereby improving usage experience of users. In addition, a waste of computing power of the server during image rendering can be reduced.

According to a second aspect, this application provides an image processing apparatus. The apparatus includes: an acquisition unit, configured to acquire a first image to be processed; a determining unit, configured to divide the first image into a plurality of pixel blocks, and determine a sub bit rate of each pixel block, where each pixel block includes a plurality of pixels in the first image, and the sub bit rate of each pixel block is determined based on an area of each pixel block and a quantity of pixels included in each pixel block; and a compression unit, configured to compress the first image based on a plurality of sub bit rates of the plurality of pixel blocks.

In a possible implementation of the second aspect, the determining unit is specifically configured to: determine a picture quality level of each pixel block based on the area of each pixel block and the quantity of the pixels included in each pixel block, where the picture quality level represents a degree of dispersion between luminance values corresponding to the plurality of pixels in each pixel block; and determine the sub bit rate of each pixel block based on a target bit rate of the first image and the picture quality level of each pixel block.

In a possible implementation of the second aspect, the determining unit is specifically configured to: determine a luminance value of each pixel in the first image; determine a luminance variance value of the plurality of pixels included in each pixel block; and determine the picture quality level of each pixel block based on the luminance variance value.

In a possible implementation of the second aspect, the picture quality level of each pixel block includes a first level, a second level, or a third level; the first level indicates that the luminance variance value of each pixel block is less than or equal to a first threshold; the second level indicates that the luminance variance value of each pixel block is greater than the first threshold and less than a second threshold, where the second threshold is greater than the first threshold; and the second level indicates that the luminance variance value of each pixel block is greater than or equal to the second threshold.

In a possible implementation of the second aspect, different picture quality levels are respectively associated with different bit allocation weights, the picture quality level is positively correlated with the bit allocation weight, and the determining unit is specifically configured to: determine a bit allocation weight corresponding to each pixel block in the first image based on the picture quality level of each pixel block; and determine the sub bit rate of each pixel block based on the target bit rate of the first image and the bit allocation weight corresponding to each pixel block.

In a possible implementation of the second aspect, the acquisition unit is specifically configured to: acquire a plurality of frames of source images to be processed; and render the plurality of frames of source images to obtain a plurality of frames of rendered images, where a rendering manner includes performing at least one of a rendering process of a rendering application or artificial intelligence generated content AIGC, and the plurality of frames of rendered images include the first image.

In a possible implementation of the second aspect, the plurality of frames of source images include a first source image and a second source image, the first source image corresponds to the first image, the second source image is adjacent to the first source image, and a timestamp of the second source image is after a timestamp of the first source image; and the acquisition unit is specifically configured to: determine a rendering manner of each pixel block in the second source image based on the picture quality level of each pixel block in the first image, where corresponding rendering manners are configured for different picture quality levels, and the picture quality level is positively correlated with rendering precision of the rendering manner corresponding to the picture quality level; and render the second source image in the rendering manner of each pixel block in the second source image to obtain the second image.

In a possible implementation of the second aspect, the apparatus further includes a sending unit, configured to: generate a bit stream based on a plurality of frames of compressed images when each of the plurality of frames of images is rendered and compressed; and send the bit stream.

According to a third aspect, this application provides an image processing system, including a terminal device and a server, where the terminal device is configured to: send, to the server, a request for acquiring a bit stream, where the request includes a plurality of consecutive frames of images; and the server is configured to: perform rendering in response to the request to obtain the plurality of frames of images; divide each frame of image in the plurality of frames of images into a plurality of pixel blocks, and determine a sub bit rate of each pixel block, where each pixel block includes a plurality of pixels in each frame of image, and the sub bit rate of each pixel block is determined based on an area of each pixel block and a quantity of pixels included in each pixel block; compress each frame of image in the plurality of frames of images based on a plurality of sub bit rates of the plurality of pixel blocks; generate a bit stream based on a plurality of frames of compressed images; and send the bit stream to the terminal device.

A fourth aspect provides a server, including a processor and a memory, where the processor is connected to the memory. The memory is configured to store computer-executable instructions. The processor executes the computer-executable instructions stored in the memory, to implement any method provided in the first aspect.

A fifth aspect provides a chip. The chip includes a processor and an interface circuit. The interface circuit is configured to receive code instructions and transmit the code instructions to the processor. The processor is configured to run the code instructions to perform any method provided in the first aspect.

A sixth aspect provides a computer-readable storage medium, storing computer-executable instructions. When the computer-executable instructions are run on a computer, the computer is enabled to perform any method provided in the first aspect.

A seventh aspect provides a computer program product, including computer-executable instructions. When the computer-executable instructions are run on a computer, the computer is enabled to perform any method provided in the first aspect.

For technical effects brought by any design in the second aspect to the seventh aspect, refer to the technical effects brought by different implementations in the first aspect, and details are not described herein again.

### BRIEF DESCRIPTION OF DRAWINGS

FIG. 1 is a diagram of a cloud image rendering scenario;
FIG. 2 is a diagram of another cloud image rendering scenario;
FIG. 3 is a diagram of still another cloud image rendering scenario;
FIG. 4a is a diagram of an architecture of an image processing system according to an embodiment of this application;
FIG. 4b is a diagram of a process of an image processing method according to an embodiment of this application;
FIG. 4c is a diagram of a process of another image processing method according to an embodiment of this application;
FIG. 5 is a block diagram of a structure of a server according to an embodiment of this application;
FIG. 6 is a schematic flowchart of an image processing method according to an embodiment of this application;
FIG. 7 is a diagram of an image rendering process according to an embodiment of this application;
FIG. 8 is a diagram of a pixel block according to an embodiment of this application;
FIG. 9 is a schematic flowchart of another image processing method according to an embodiment of this application;
FIG. 10 is a schematic flowchart of still another image processing method according to an embodiment of this application;
FIG. 11 is a diagram of generation of a rendering density tree according to an embodiment of this application;
FIG. 12 is a diagram of rendering of a pixel block according to an embodiment of this application;
FIG. 13 is another diagram of rendering of a pixel block according to an embodiment of this application; and
FIG. 14 is a block diagram of a structure of an image processing apparatus according to an embodiment of this application.

### DESCRIPTION OF EMBODIMENTS

The following describes technical solutions in embodiments of this application with reference to accompanying drawings in embodiments of this application. In descriptions of this application, unless otherwise specified, "/" represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A or B may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

In addition, to clearly describe the technical solutions in embodiments of this application, terms such as "first" and "second" are used in embodiments of this application to distinguish between same items or similar items that have basically the same functions and effects. A person skilled in the art may understand that the terms such as "first" and "second" do not limit a quantity or an execution sequence, and the terms such as "first" and "second" do not indicate a definite difference. In addition, in some embodiments of this application, the word such as "example" or "for example" represents giving an example, an illustration, or a description. Any embodiment or design scheme described as an "example" or with "for example" in embodiments of this application should not be explained as being more preferred or having more advantages than another embodiment or design scheme. Exactly, use of the word such as "example" or "for example" is intended to present a related concept in a specific manner for ease of understanding.

In addition, a network architecture and service scenario described in embodiments of this application are intended to describe the technical solutions in embodiments of this application more clearly, and do not constitute a limitation on the technical solutions provided in embodiments of this application. A person of ordinary skill in the art may learn that with evolution of the network architecture and emergence of new service scenarios, the technical solutions provided in embodiments of this application are also applicable to similar technical problems.

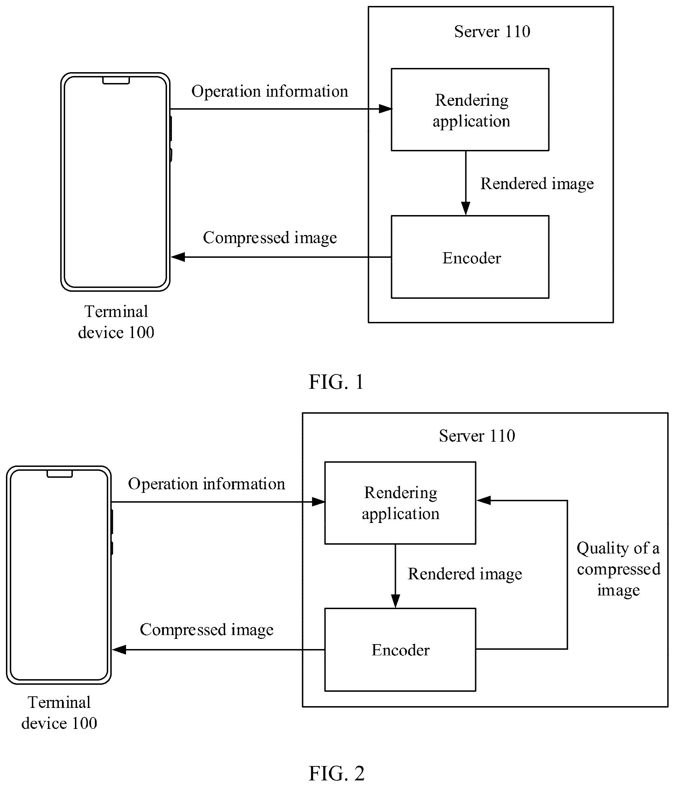

Cloud image rendering (cloud 3D rendering applications, cloud 3D) means that rendering is performed by using a rendering application deployed in a server to obtain an image, and then the server performs bit rate allocation on the image, compresses the image, and then sends the image to a terminal device of a user. The bit rate allocation means allocating different numbers of bits respectively to different regions of the image. FIG. 1 is a diagram of a cloud image rendering scenario. A user sends input operation information to a server 110 by using a terminal device 100. The server 110 performs rendering by using a rendering application based on the operation information input by the user, to obtain an image, then compresses the rendered image by using an encoder, and finally sends the compressed image to the terminal device 100 of the user. To adapt to a limited channel bandwidth between the server 110 and the terminal device 100, a manner in which the server 110 compresses the rendered image is usually lossy compression. However, because all regions of the image are compressed at same or similar bit rates, quality of each region in the compressed image is lower than quality of the rendered image. This results in a waste of computing power consumed by the server 110 during image rendering, and results in poor quality of the image obtained after lossy compression, making it difficult to meet use requirements of users.

In conventional technology 1, with reference to FIG. 2, a server 110 usually feeds back quality of a compressed image to a rendering application, and the rendering application performs image rendering based on the quality of the compressed image, so that quality of a rendered image matches the quality of the compressed image, avoiding the quality of the rendered image being higher than the quality of the compressed image, thereby saving computing power consumed by the server 110 during image rendering. However, in this manner, although the computing power of the server 110 is saved during image rendering, there is a problem of poor quality of an image obtained through rendering, making it difficult to meet use requirements of users.

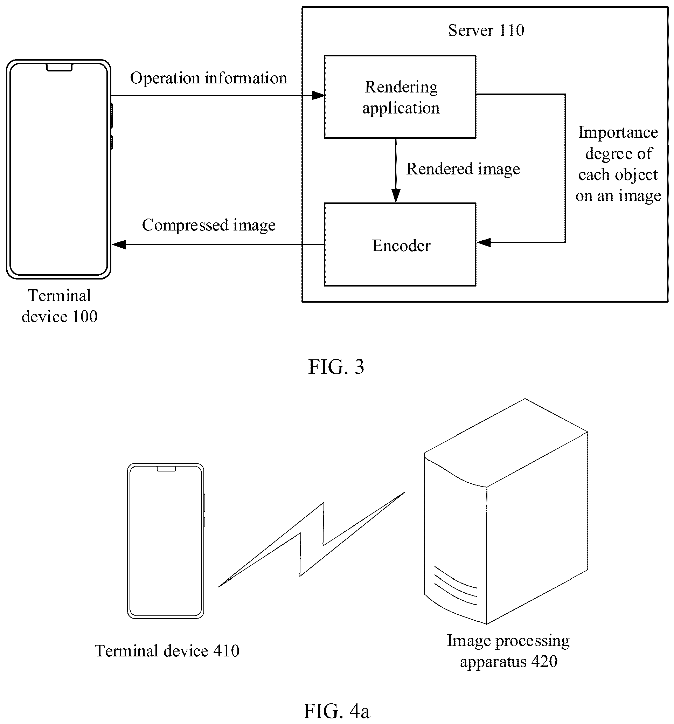

In conventional technology 2, with reference to FIG. 3, a server 110 performs image recognition based on an object in an image, and then determines an importance degree of each object based on location information of each object in the image. For example, an object close to a camera location is determined as having a high importance degree, and an object far from the camera location is determined as having a low importance degree. Finally, an encoder determines bit rates of different regions of each frame of image based on the importance degree of each object, and completes compression. According to this method, although image quality of some regions on an image can be improved to some extent, there is a problem of poor accuracy in determining the importance degree of the object based on the location information. For example, in some scenarios, an object A far from a camera location is a primary focus of a user, but the server 110 determines that an importance degree of the object A is low because the object A is far from the camera location, and therefore, a low bit rate is allocated to the object A. In this case, picture quality of the object A in the image is low, making it difficult to meet use requirements of users.

Based on the foregoing content, an embodiment of this application provides an image processing method, applicable to the foregoing cloud image rendering scenario. A server determines a picture quality level of each pixel block of a first image, then determines a sub bit rate of each pixel block of the first image based on a target bit rate of the first image and the picture quality level of each pixel block, and then compresses the first image based on the sub bit rate of each pixel block, to obtain the compressed first image. According to the method provided in an embodiment of this application, different bit rates are allocated to all pixel blocks based on the picture quality level of each pixel block of the first image and based on the picture quality level of each pixel block. For example, a high number of bits is allocated to a region with a high picture quality level on the first image, and a low number of bits is allocated to a region with a low picture quality level on the first image. When a channel bandwidth between the server and a terminal device is limited, that is, when the target bit rate of the first image is fixed, image quality of some regions in the compressed image can be improved, and a waste of computing power of the server in a process of rendering the first image can be reduced.

The image processing method provided in an embodiment of this application is applicable to an image processing system. FIG. 4a is a diagram of an architecture of an image processing system according to an embodiment of this application. The image processing system includes a terminal device 410 and an image processing apparatus 420.

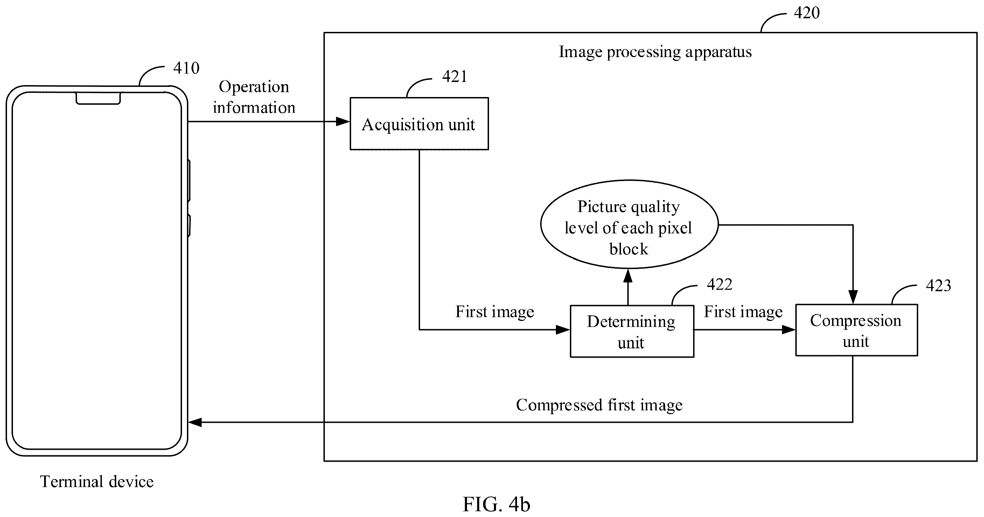

In an example, FIG. 4b is a diagram of a process of an image processing method according to an embodiment of this application. The image processing apparatus 420 includes an acquisition unit 421, a determining unit 422, and a compression unit 423. The acquisition unit 421 is configured to perform rendering based on operation information input by a user, to obtain a first image, and then send the first image to the determining unit 422. The determining unit 422 is configured to divide the first image into a plurality of pixel blocks, and determine a picture quality level of each pixel block of the first image. Each pixel block includes a plurality of pixels in the first image. The picture quality level represents a degree of dispersion between luminance values corresponding to the plurality of pixels in each pixel block. The determining unit 422 is further configured to send the picture quality level of each pixel block of the first image to the compression unit 423. The compression unit 423 is configured to determine a sub bit rate of each pixel block of the first image based on a target bit rate of the first image and the picture quality level of each pixel block, and is configured to compress the first image based on a plurality of sub bit rates of the plurality of pixel blocks.

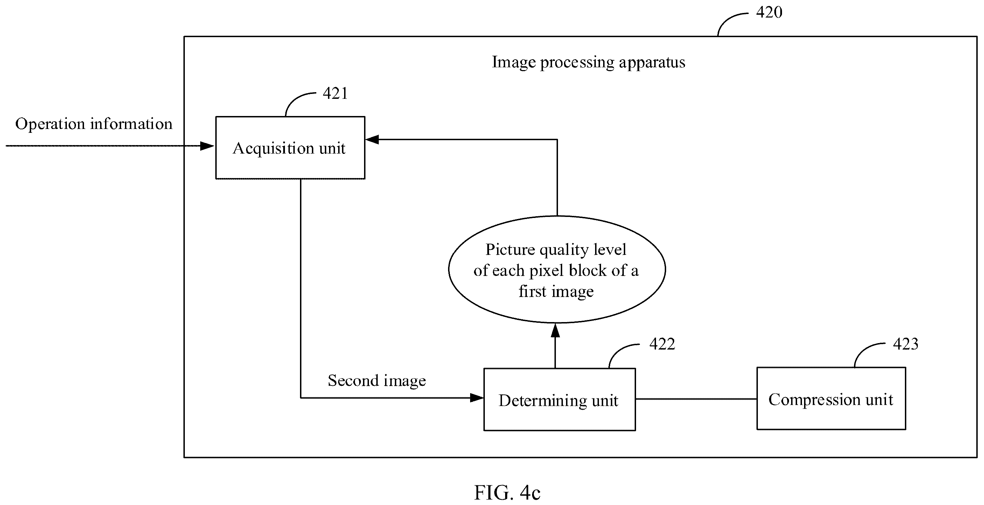

Optionally, with reference to FIG. 4c, when the first image is one of a plurality of consecutive frames of images, the determining unit 422 is further configured to send the picture quality level of each pixel block of the first image to the acquisition unit 421, for the acquisition unit 421 to render a second image based on the picture quality level of each pixel block of the first image to obtain the second image. The second image is an image adjacent to the first image in the plurality of consecutive frames of images, and a timestamp of the second image is after a timestamp of the first image.

It should be understood that, after the image processing apparatus 420 provided in an embodiment of this application obtains the second image, a specific manner of determining a picture quality level and a sub bit rate of each pixel block of the second image, and compressing the second image is the same as the foregoing processing manner of the first image. Details are not described herein again.

In some embodiments, a communication connection is established between the terminal device 410 and the image processing apparatus 420. The communication connection may include a wired communication connection or a wireless communication connection. For example, the wireless communication connection may include a short-distance wireless communication connection such as a Bluetooth communication connection, a near-field communication connection, and a wireless local area network communication connection. A wireless communication technique for establishing the wireless communication connection between the terminal device 410 and the image processing apparatus 420 includes, but is not limited to, at least one of the following: a wireless local area network (wireless local area network, WLAN) (for example, a wireless fidelity (wireless fidelity, Wi-Fi) network), Bluetooth (Bluetooth, BT) (for example, conventional Bluetooth or Bluetooth low energy (Bluetooth low energy, BLE)), short-distance wireless communication (near field communication, NFC), ZigBee (ZigBee), frequency modulation (frequency modulation, FM), and infrared (infrared, IR).

It may be understood that the terminal device 410 in an embodiment of this application may be, for example, a mobile phone, a tablet computer, a personal computer (personal computer, PC), a personal digital assistant (personal digital assistant, PDA), a smartwatch, a netbook, a wearable device, an augmented reality (augmented reality, AR) device, a virtual reality (virtual reality, VR) device, an on-board device, a smart screen, a smart car, a smart speaker, or a robot. A specific form of the terminal device 410 is not particularly limited in this application.

In an embodiment of this application, the image processing apparatus 420 may be a computing device with any computing and processing capability, or may be a functional module in the computing device. For example, the computing device may be a general-purpose computer, a notebook computer, a server, or the like. A specific form of the image processing apparatus 420 is not particularly limited in this application.

In addition, an operating system installed on the terminal device 410 and the image processing apparatus 420 includes, but is not limited to, iOS^{®}, Android^{®}, Harmony^{®}, Windows^{®}, Linux^{®}, or another operating system. Specific types of the terminal device 410 and the image processing apparatus 420, and a type of an operating system corresponding to a case in which the operating system is installed are not limited in this application.

The following embodiment is described using an example in which the image processing apparatus 420 is a server.

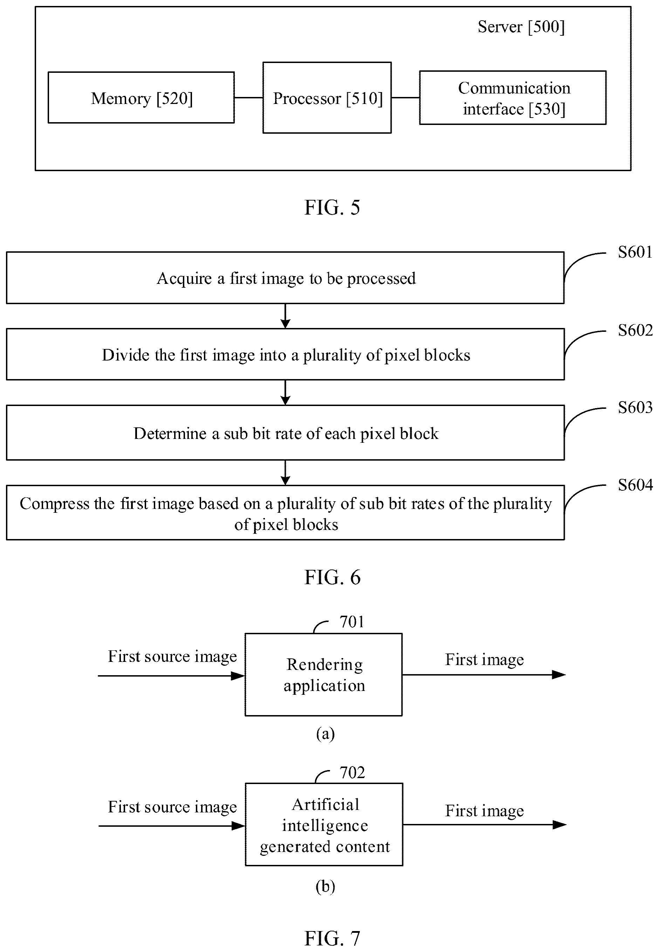

FIG. 5 is a diagram of a structure of a server according to an embodiment of this application. The server 500 includes a processor 510, a memory 520, and at least one communication interface 530.

The processor 510 may include one or more processing cores. The processor 510 is connected to various parts in the server 500 by using various interfaces and lines, and runs or executes instructions, a program, a code set, or an instruction set stored in the memory 520, and calls data stored in the memory 520, to implement various functions of the server 500 and process data. Optionally, the processor 510 may be implemented in at least one hardware form of digital signal processing (digital signal processing, DSP), a field-programmable gate array (field-programmable gate array, FPGA), and a programmable logic array (programmable logic array, PLA). The processor 510 may integrate one or a combination of a central processing unit (central processing unit, CPU), a graphics processing unit (graphics processing unit, GPU), a modem, and the like. It may be understood that the modem may alternatively not be integrated into the processor 510, and is implemented through a communication chip alone.

The memory 520 may be configured to store instructions, a program, code, a code set, or an instruction set. The memory 520 may include a program storage area. The program storage area may store instructions for implementing an operating system, instructions for implementing at least one function (such as an image rendering function and an image compression function), instructions for implementing the following method embodiments, and the like.

The communication interface 530 is configured to communicate with a device in a communication network or a telecommunication network, such as Ethernet, a radio access network (RAN), a wireless local area network (wireless local area network, WLAN), or an AP in a WLAN network. For example, the communication interface 530 of the server 500 communicates with the terminal device 410.

During specific implementation, in a physical implementation, the foregoing components (such as the processor 510, the memory 520, and the communication interface 530) may be components in a same computing device; or at least two of the components may be disposed in a same computing device, that is, used as different components in a computing device, for example, similar to a deployment manner of devices or components in a distributed system.

It may be understood that the structure shown in this embodiment does not constitute a specific limitation on the server 500. In some embodiments, the server 500 may include more or fewer components than those shown in the figure, or some components may be combined, or some components may be split, or there may be different arrangements of the components. The components shown in the figure may be implemented by hardware, software, or a combination of software and hardware.

The following describes the image processing method provided in embodiments of this application with reference to the accompanying drawings.

FIG. 6 is a flowchart of an image processing method according to an embodiment of this application. Optionally, the method may be performed by the server 500 with the hardware structure shown in FIG. 5. The method may include the following steps.

S601: Acquire a first image to be processed.

Specifically, the first image may be an image obtained through rendering by the server. For example, the server renders a first source image corresponding to the first image to obtain the first image.

In some embodiments, a manner of rendering by the server to obtain the first image includes performing at least one of a rendering process of a rendering application or artificial intelligence generated content. For example, with reference to FIG. 7, (a) in FIG. 7 is a diagram of a process in which the server obtains the first image based on the first source image through a rendering application 701; and (b) in FIG. 7 is a diagram of a process in which the server obtains the first image based on the first source image through artificial intelligence generated content 702.

It should be understood that the server may alternatively perform rendering in another manner to obtain the first image. A specific implementation in which the server acquires the first image is not particularly limited in embodiments of this application.

In a possible implementation, S601 specifically includes the following steps:
acquiring a plurality of frames of source images to be processed; and rendering the plurality of frames of source images to obtain a plurality of frames of rendered images.

Specifically, the plurality of frames of source images include the first source image corresponding to the first image. The plurality of frames of rendered images include the first image.

In some embodiments, the plurality of frames of source images are carried in a request sent by the terminal device to the server. The request is used to request the server to render the plurality of frames of source images carried in the request to obtain the plurality of frames of images, and return a bit stream including the plurality of frames of images.

Specifically, the request may be generated based on an operation input by a user in a picture displayed by the terminal device, and the bit stream is used to display a plurality of frames of pictures that should be displayed by the terminal device after the user inputs the operation. For example, in a scenario in which the terminal device runs a game, when the user performs a click/tap operation on a game picture displayed by the terminal device, the terminal device generates a corresponding request in response to the click/tap operation of the user on a game interface, and sends the request carrying a plurality of frames of source images to the server, for the server to return a bit stream including a plurality of frames of images. The bit stream is used to display a plurality of frames of game pictures that should be displayed by the terminal device after the user performs the click/tap operation.

S602: Divide the first image into a plurality of pixel blocks.

Specifically, all the pixel blocks respectively correspond to different regions on the first image, and each pixel block includes a plurality of pixels in the first image. It should be understood that a shape of each pixel block and a quantity of pixels included in the pixel block may be set based on requirements of the user. For example, quantities of pixels included in different pixel blocks on a same frame of image may be the same or may be different, and shapes of different pixel blocks on a same frame of image may be the same or may be different. A specific implementation of the pixel block is not particularly limited in embodiments of this application.

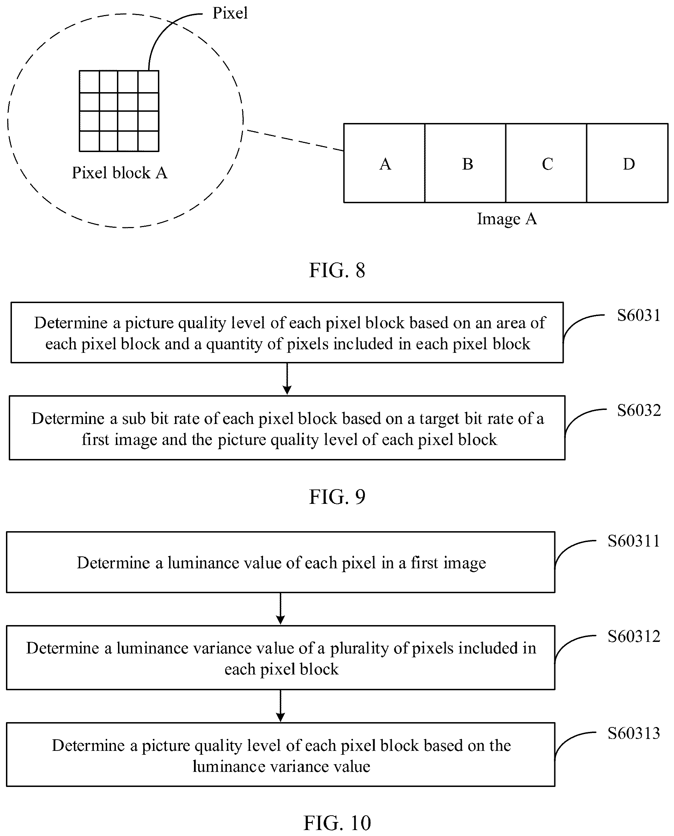

For example, FIG. 8 is a diagram of a pixel block according to an embodiment of this application. The server divides an image A into four square pixel blocks: a pixel block A, a pixel block B, a pixel block C, and a pixel block D. Each pixel block includes 4*4 pixels.

S603: Determine a sub bit rate of each pixel block.

Specifically, the sub bit rate of each pixel block of the first image is a number of bits allocated by the server to each pixel block.

In a possible implementation, with reference to FIG. 9, S603 specifically includes the following steps.

S6031: Determine a picture quality level of each pixel block based on an area of each pixel block and a quantity of pixels included in each pixel block.

Specifically, the server may preset a plurality of picture quality levels corresponding to the pixel blocks in a gradient, where the plurality of picture quality levels are respectively used to represent different degrees of dispersion between luminance values corresponding to a plurality of pixels in different pixel blocks, so that different picture quality of all the pixel blocks can be represented. The picture quality may also be understood as display fineness of the pixel block.

Optionally, the picture quality level includes a first level, a second level, and a third level. The first level is the lowest picture quality level, and the third level is the highest picture quality level. When content on a pixel block needs to be displayed with low precision, a picture quality level corresponding to the pixel block is the first level. When content on a pixel block needs to be displayed with medium precision, a picture quality level corresponding to the pixel block is the second level. When content on a pixel block needs to be displayed with high precision, a picture quality level corresponding to the pixel block is the third level.

It should be understood that, in an embodiment of this application, the division of the picture quality level of the pixel block into the first level, the second level, and the third level is merely an example of division. According to the method provided in embodiments of this application, the picture quality level of the pixel block is divided at finer granularity. For example, the picture quality level of the pixel block is divided into five levels based on different display precision of content on the pixel block. A specific division manner of the picture quality level of the pixel block is not particularly limited in embodiments of this application.

In some embodiments, with reference to FIG. 10, S6031 specifically includes the following steps.

S60311: Determine a luminance value of each pixel in the first image.

Specifically, a color mode of the first image obtained by the server using the rendering application is an RGB color mode. The RGB color mode is a color standard, in which a color of each pixel on the first image is obtained through changing and overlaying of three color channels: red (R), green (G), and blue (B). The server first switches the color mode of the first image from the RGB color mode to a YUV color mode. In the YUV color mode, a color of each pixel on the first image is represented by a luminance value (Y) and two chrominance values (U and V). In other words, the server generates a YUV luminance map of the first image based on the rendered first image, and then acquires, from the YUV luminance map of the first image, a luminance value corresponding to each pixel on the first image.

S60312: Determine a luminance variance value of the plurality of pixels included in each pixel block.

Specifically, the server calculates the luminance variance value of each pixel block based on the luminance value corresponding to each pixel. The luminance variance value of the pixel block is equal to an average value of a sum of squares of deviations between a luminance value of each pixel and an average luminance value of all pixels in the pixel block.

S60313: Determine the picture quality level of each pixel block based on the luminance variance value.

In a possible implementation, S60313 specifically includes the following steps:
determining the picture quality level as the first level when the luminance variance value of the pixel block is less than or equal to a first threshold; determining the picture quality level as the second level when the luminance variance value of the pixel block is greater than the first threshold and less than a second threshold; and determining the picture quality level as the third level when the luminance variance value of the pixel block is greater than or equal to the second threshold.

For example, with reference to FIG. 8, when the first threshold is 2 and the second threshold is 10, assuming that a luminance variance value of the pixel block A is 1, a luminance variance value of the pixel block B is 4, a luminance variance value of the pixel block C is 9, and a luminance variance value of the pixel block D is 15, the server determines that a picture quality level of the pixel block A is the first level, picture quality levels of the pixel block B and the pixel block C are the second level, and a picture quality level of the pixel block D is the third level.

It should be understood that, in an embodiment of this application, presetting the first threshold and the second threshold and dividing the picture quality level into the first level, the second level, and the third level based on the first threshold and the second threshold are merely an example. According to the method provided in embodiments of this application, a larger quantity of thresholds may be set, so that a larger quantity of threshold intervals are obtained through division based on the larger quantity of thresholds, to divide the picture quality level of the pixel block at finer granularity based on the larger quantity of threshold intervals. A specific division manner of the picture quality level of the pixel block is not particularly limited in embodiments of this application.

It can be learned from S60311 to S60313 that, according to the method provided in embodiments of this application, the luminance variance value of each pixel block of the first image can be determined by generating the YUV luminance map corresponding to the first image, so that the picture quality level of each pixel block of the first image can be determined based on the luminance variance value.

In a possible implementation, the method provided in embodiments of this application further includes the following steps: marking different pixel blocks on the first image based on the picture quality level corresponding to each pixel block, and then combining adjacent pixel blocks with a same picture quality level, to obtain a rendering density tree of the first image, where the rendering density tree of the first image is used to identify picture quality levels corresponding to different regions on the first image.

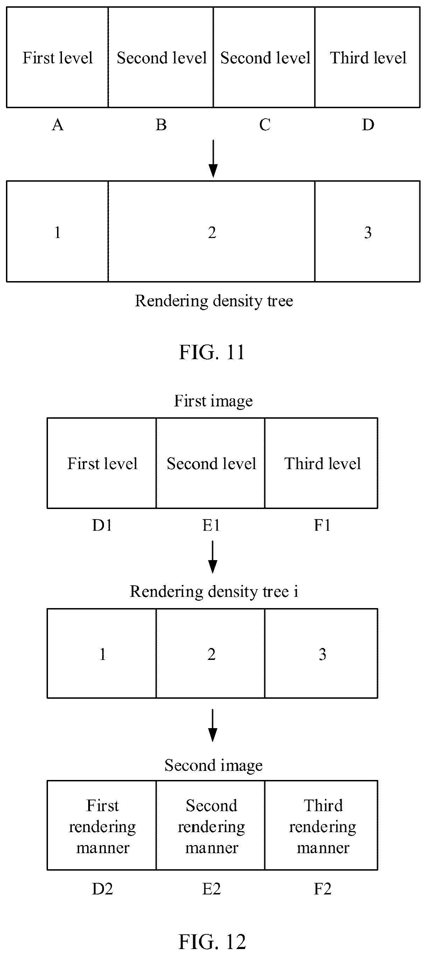

For example, with reference to FIG. 8, FIG. 11 is a diagram of generation of a rendering density tree according to an embodiment of this application. The server first marks the pixel block whose picture quality level is the first level in the image A as 1, marks the pixel block whose picture quality level is the second level as 2, and marks the pixel block whose picture quality level is the third level as 3; and then combines adjacent pixel blocks with a same picture quality level, to finally obtain a rendering density tree corresponding to the image A.

Optionally, a process in which the server determines the picture quality level of each pixel block of the first image and a process in which the server generates the rendering density tree of the first image may be implemented based on a compute shader (compute shader, CS) tool in a graphics processing unit (graphics processing unit, GPU) configured in the server.

S6032: Determine a sub bit rate of each pixel block based on a target bit rate of the first image and the picture quality level of each pixel block.

Specifically, based on a channel bandwidth between the server and the terminal device, the server determines the target bit rate of the first image, that is, a total number of bits allocated by the server to the first image, and the sub bit rate of each pixel block of the first image is a number of bits allocated by the server to each pixel block.

In some embodiments, different picture quality levels are respectively associated with different bit allocation weights, the picture quality level is positively correlated with the bit allocation weight. S6032 specifically includes the following steps:
determining a bit allocation weight corresponding to each pixel block in the first image based on the picture quality level of each pixel block; and determining the sub bit rate of each pixel block based on the target bit rate of the first image and the bit allocation weight corresponding to each pixel block.

For example, a bit allocation weight associated with the picture quality level being the first level is x, a bit allocation weight associated with the picture quality level being the second level is y, and a bit allocation weight associated with the picture quality level being the third level is z. The server determines the target bit rate of the first image based on the channel bandwidth between the server and the terminal device. Then, the server determines the bit allocation weight of each pixel block based on the picture quality level of each pixel block of the first image. Finally, the server determines a bit rate of each pixel block of the first image based on the target bit rate of the first image and the bit allocation weight of each pixel block.

In a possible implementation, when the server performs bit rate allocation at a coding tree unit (coding tree unit, CTU) level by using an encoder, S603 specifically includes the following steps.

The server determines a bit allocation weight of each coding unit (coding unit, CU) based on the bit allocation weight corresponding to each pixel block, and determines the sub bit rate corresponding to each pixel block based on the bit allocation weight of each coding unit and the target bit rate of the first image.

Specifically, when a pixel block of the first image and a coding unit overlap, a bit allocation weight of the pixel block is determined as a bit allocation weight of the coding unit. When a pixel block of the first image includes a plurality of coding units, an average value of a bit allocation weight of the pixel block is determined based on a quantity of the coding units, and the average value of the bit allocation weight of the pixel block is determined as a bit allocation weight of each of the plurality of coding units. When a coding unit includes a plurality of pixel blocks, a sum of bit allocation weights of the plurality of pixel blocks is determined as a bit allocation weight of the coding unit. Finally, the sub bit rate corresponding to each pixel block is determined based on the bit allocation weight of each coding unit and the target bit rate of the first image.

S604: Compress the first image based on a plurality of sub bit rates of the plurality of pixel blocks.

Optionally, the method provided in embodiments of this application further includes the following steps:
generating a bit stream based on a plurality of frames of compressed images when each of the plurality of frames of images is rendered and compressed; and
sending the bit stream including the plurality of frames of images to the terminal device.

It can be learned from S601 to S604 that, according to the method provided in an embodiment of this application, different bit rates are allocated to all pixel blocks based on the picture quality level of each pixel block of the first image and based on the picture quality level of each pixel block. For example, a high number of bits is allocated to a region with a high picture quality level on the first image, and a low number of bits is allocated to a region with a low picture quality level on the first image. When a channel bandwidth between the server and a terminal device is limited, that is, when the target bit rate of the first image is fixed, image quality of some regions in the compressed image can be improved, and a waste of computing power of the server in a process of rendering the first image can be reduced.

In some embodiments, in a case that the server sequentially renders the plurality of frames of images including the first image, when obtaining the first image by completing rendering of the first source image, the server may determine the picture quality level corresponding to each pixel block of the first image, and then render a second source image, to obtain a second image. The second source image is adjacent to the first source image, and a timestamp of the second source image is after a timestamp of the first source image. Alternatively, after the plurality of frames of images are all rendered, the picture quality level corresponding to each pixel block in each frame of image may be sequentially determined. A rendering sequence of the images is not particularly limited in embodiments of this application.

Optionally, in a case that the server may determine, when obtaining the first image by completing rendering of the first source image, the picture quality level corresponding to each pixel block of the first image, and then render the second source image, to obtain the second image, the method provided in embodiments of this application further includes the following step:
rendering each pixel block of the second image based on the picture quality levels of the plurality of pixel blocks of the first page image when the second image is rendered, to obtain the rendered second image.

Specifically, when the server renders an image based on a rendering application or AIGC, for each pixel of each frame of image, the server may obtain the pixel by fine rendering or may obtain the pixel by interpolation calculation. A pixel obtained by fine rendering has high fineness, and a pixel obtained by interpolation calculation has low fineness.

Different picture quality levels are respectively associated with different rendering manners. Because the second image is a next frame of the first image, locations of the pixel blocks on the second image are in a one-to-one correspondence with locations of the pixel blocks on the first image, and different picture quality levels of the pixel blocks on the first image respectively correspond to different rendering manners. Therefore, based on the picture quality level corresponding to each pixel block of the first image, the rendering manner corresponding to each pixel block on the first image is determined as a rendering manner of a pixel block corresponding to each location on the second source image. Then, the server separately renders all the pixel blocks on the second source image in different rendering manners, to obtain the second image.

For example, FIG. 12 is a diagram of rendering of a pixel block according to an embodiment of this application. It is assumed that a first image includes three pixel blocks, a picture quality level of a pixel block D1 is a first level, a picture quality level of a pixel block E1 is a second level, a picture quality level of a pixel block F1 is a third level, and a rendering density tree i is a rendering density tree of the first image. When the server performs rendering based on a second source image, because a location of a pixel block D2 of a second image corresponds to a location of the pixel block D1, a location of a pixel block E2 of the second image corresponds to a location of the pixel block E1, and a location of a pixel block F2 of the second image corresponds to a location of the pixel block F1, rendering manners of different pixel blocks of the second source image are separately determined based on the rendering density tree i. Specifically, a rendering manner of the pixel block D2 is determined based on the picture quality level of the pixel block D1, a rendering manner of the pixel block E2 is determined based on the picture quality level of the pixel block E1, and a rendering manner of the pixel block F2 is determined based on the picture quality level of the pixel block F1. The rendering manner of D2 is a first rendering manner corresponding to the first level, the rendering manner of E2 is a second rendering manner corresponding to the second level, and the rendering manner of F2 is a third rendering manner corresponding to the third level. Then, the server renders the second source image in the rendering manners respectively corresponding to the pixel blocks D2, E2, and F2, to obtain the second image.

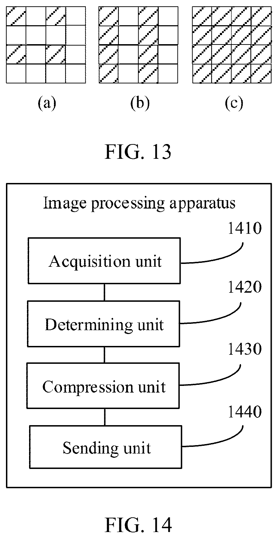

In an example, FIG. 13 is a diagram of rendering of a pixel block according to an embodiment of this application, and includes rendering processes of three blocks with different picture quality levels. A pixel filled with texture is a pixel obtained by fine rendering, and a pixel not filled with texture is a pixel obtained by interpolation calculation. Assuming that a picture quality level of a pixel block A is a first level, and a first rendering manner corresponding to the first level is shown in (a) in FIG. 13, pixels in a first proportion in the pixel block are generated by fine rendering, and the other pixels are generated by interpolation calculation. The first proportion is 25%. A picture quality level of a pixel block B is a second level, a second rendering manner corresponding to the second level is shown in (b) in FIG. 13, pixels in a second proportion in the pixel block are generated by fine rendering, and the other pixels are generated by interpolation calculation. The second proportion is 50%. A third rendering manner corresponding to a third level is shown in (c) in FIG. 13. A picture quality level of a pixel block C is the third level. The rendering manner of the pixel block C is generating pixels in a third proportion in the pixel block by fine rendering, and generating the other pixels by interpolation calculation. The third proportion is 100%.

It should be noted that the foregoing different rendering manners corresponding to different picture quality levels are merely examples for description. In an embodiment of this application, the picture quality level may be divided at finer granularity, and different rendering manners may be respectively configured for all picture quality levels. This is not particularly limited in embodiments of this application.

According to the method provided in embodiments of this application, in the process of rendering the second image, the rendering manner of each pixel block on the second image is determined based on the picture quality level corresponding to each pixel block of the first frame of image, and finally the second source image is rendered, to obtain the second image. Cooperation between an image rendering process and an image compression process of the server is implemented. To be specific, based on the picture quality level corresponding to each pixel block of the first image, rendering of different picture regions of the second image with different fineness is implemented, and compression of different picture regions of the first image with different fineness is implemented. In this way, when a channel bandwidth between the server and the terminal device is limited, image quality of the compressed image can be improved, and a waste of computing power consumed by the server during image rendering can be reduced.

Optionally, the method provided in embodiments of this application further includes the following steps:
generating a bit stream based on a plurality of frames of compressed images when each of the plurality of frames of images is rendered and compressed; and
sending the bit stream including the plurality of frames of images to the terminal device.

In a possible implementation, a program for implementing the steps of the image processing method provided in embodiments of this application may be configured inside the server and implemented in a form of a plurality of application programming interfaces (application programming interface, API) being called by the server.

In an example, a process of generating a rendering density tree is implemented by calling an application programming interface (application programming interface, API) by the server. The server calls an API to generate a rendering density tree of the first image. For example, a name of an API for generating the rendering density tree of the first image may be:
glGenRenderDensityTree(int*pixels,double Thd,double k);
vkGenRenderDensityTree(int*pixels,double Thd,double k);

Herein, "pixels" indicates each of a plurality of frames of images, Thd indicates the first threshold, and k*Thd indicates the second threshold.

The API is configured to generate a rendering density tree of each frame of image in response to a call of the server.

In another example, a name of an API for returning the rendering density tree of each frame of image may be:
xxGetRenderDensityTree();
glGetRenderDensityTree();
glGetRenderDensityTree();

The API is configured to enable, in response to a call of the server after the rendering density tree is generated, the server to acquire the rendering density tree of the first image.

In still another example, a process in which the server renders the second source image based on the rendering density tree of the first image may also be implemented based on an API, and a name of the API may be:
glSetRenderDensityTree(Tree);
vkSetRenderDensityTree(Tree);

The API is configured to render, after the server receives the rendering density tree of the first image, that is, after the server receives picture quality levels of different pixel blocks on the first image, the second source image based on the rendering density tree of the first image, to obtain the second image.

It should be noted that the foregoing APIs are merely examples for description. In an embodiment of this application, the steps of implementing the image processing method provided in this application may be implemented in another manner. This is not particularly limited in embodiments of this application.

The foregoing mainly describes the solutions in embodiments of this application from a perspective of the method. It may be understood that, to implement the foregoing functions, the server includes at least one of a hardware structure and a software module for performing a corresponding function. A person skilled in the art should be easily aware that, in combination with units and algorithm steps of the examples described in the embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the image processing apparatus may be divided into functional units based on the foregoing method examples. For example, the image processing apparatus may be divided into functional units based on corresponding functions, or two or more functions may be integrated into one unit. The integrated unit may be implemented in a form of hardware, or may be implemented in a form of a software functional unit. It should be noted that, in embodiments of this application, division into the units is an example, and is merely logical function division. During actual implementation, another division manner may be used.

For example, FIG. 14 is a block diagram of a structure of an image processing apparatus according to an embodiment of this application. The apparatus includes an acquisition unit 1410, a determining unit 1420, and a compression unit 1430. The acquisition unit 1410 is configured to acquire a first image to be processed. The determining unit 1420 is configured to divide the first image into a plurality of pixel blocks, and determine a sub bit rate of each pixel block, where each pixel block includes a plurality of pixels in the first image, and the sub bit rate of each pixel block is determined based on an area of each pixel block and a quantity of pixels included in each pixel block. The compression unit 1430 is configured to compress the first image based on a plurality of sub bit rates of the plurality of pixel blocks.

Optionally, the determining unit 1420 is specifically configured to: determine a picture quality level of each pixel block based on the area of each pixel block and the quantity of the pixels included in each pixel block, where the picture quality level represents a degree of dispersion between luminance values corresponding to the plurality of pixels in each pixel block; and determine the sub bit rate of each pixel block based on a target bit rate of the first image and the picture quality level of each pixel block.

Optionally, the determining unit 1420 is specifically configured to: determine a luminance value of each pixel in the first image; determine a luminance variance value of the plurality of pixels included in each pixel block; and determine the picture quality level of each pixel block based on the luminance variance value.

Optionally, the picture quality level of each pixel block includes a first level, a second level, or a third level; the first level indicates that the luminance variance value of each pixel block is less than or equal to a first threshold; the second level indicates that the luminance variance value of each pixel block is greater than the first threshold and less than a second threshold, where the second threshold is greater than the first threshold; and the second level indicates that the luminance variance value of each pixel block is greater than or equal to the second threshold.

Optionally, different picture quality levels are respectively associated with different bit allocation weights, the picture quality level is positively correlated with the bit allocation weight, and the determining unit 1420 is specifically configured to: determine a bit allocation weight corresponding to each pixel block in the first image based on the picture quality level of each pixel block; and determine the sub bit rate of each pixel block based on the target bit rate of the first image and the bit allocation weight corresponding to each pixel block.

Optionally, the acquisition unit 1410 is specifically configured to: acquire a plurality of frames of source images to be processed; and render the plurality of frames of source images to obtain a plurality of frames of rendered images, where a rendering manner includes performing at least one of a rendering process of a rendering application or artificial intelligence generated content AIGC, and the plurality of frames of rendered images include the first image.

Optionally, the plurality of frames of source images include a first source image and a second source image, the first source image corresponds to the first image, the second source image is adjacent to the first source image, and a timestamp of the second source image is after a timestamp of the first source image; and the acquisition unit 1410 is specifically configured to: determine a rendering manner of each pixel block in the second source image based on the picture quality level of each pixel block in the first image, where corresponding rendering manners are configured for different picture quality levels, and the picture quality level is positively correlated with rendering precision of the rendering manner corresponding to the picture quality level; and render the second source image in the rendering manner of each pixel block in the second source image to obtain the second image.

Optionally, the apparatus further includes a sending unit 1440, configured to: generate a bit stream based on a plurality of frames of compressed images when each of the plurality of frames of images is rendered and compressed; and send the bit stream.

For detailed descriptions of the foregoing optional implementations, refer to the foregoing method embodiments. Details are not described herein again. In addition, for any explanation of the image processing apparatus provided above and descriptions of beneficial effects, refer to the foregoing corresponding method embodiments. Details are not described herein again.

An embodiment of this application further provides a computer-readable storage medium. The computer-readable storage medium stores at least one computer instruction, and the at least one computer instruction is loaded and executed by a processor to implement the image processing method in the foregoing embodiments. For any explanation of content related to the computer-readable storage medium provided above and descriptions of beneficial effects, refer to the foregoing corresponding embodiments. Details are not described herein again.

An embodiment of this application further provides a chip. A control circuit for implementing functions of the image processing apparatus, and one or more ports are integrated into the chip. Optionally, for functions supported by the chip, refer to the foregoing descriptions. Details are not described herein again. A person of ordinary skill in the art may understand that all or some of the steps in the foregoing embodiments may be implemented by a program instructing relevant hardware. The program may be stored in a computer-readable storage medium. The storage medium mentioned above may be a read-only memory, a random access memory, or the like. The unit or the processor may be a central processing unit, a general-purpose processor, a specific circuit structure (application specific integrated circuit, ASIC), a microprocessor (digital signal processor, DSP), a field programmable gate array (field programmable gate array, FPGA) or another programmable logic device, a transistor logic device, a hardware component, or any combination thereof.

An embodiment of this application further provides a computer program product including instructions. When the instructions are run on a computer, the computer is enabled to perform any method in the foregoing embodiments. The computer program product includes a plurality of computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating a plurality of usable media. The usable medium may be a magnetic medium (for example, a floppy disk, a hard disk, or a magnetic tape), an optical medium (for example, a DVD), a semiconductor medium (for example, an SSD), or the like.

It should be noted that all the foregoing components provided in embodiments of this application and configured to store computer instructions or computer programs, for example, but not limited to, the memory, the computer-readable storage medium, and the communication chip, are non-transitory (non-transitory). A person skilled in the art should be aware that in the plurality of examples, the functions described in embodiments of this application may be implemented by hardware, software, firmware, or any combination thereof. When these functions are implemented by software, these functions may be stored in a computer-readable storage medium or transmitted as a plurality of instructions or code in a computer-readable storage medium. The computer-readable storage medium includes a computer storage medium and a communication medium. The communication medium includes any medium that facilitates transfer of a computer program from one place to another place. The storage medium may be any available medium accessible to a general-purpose or dedicated computer.

The foregoing descriptions are merely optional embodiments of this application, but are not intended to limit this application. Any modification, equivalent replacement, or improvement made within the spirit and principle of this application shall fall within the protection scope of this application.

## Claims

1. An image processing method, comprising:
acquiring a first image to be processed;
dividing the first image into a plurality of pixel blocks, and determining a sub bit rate of each pixel block, wherein each pixel block comprises a plurality of pixels in the first image, and the sub bit rate of each pixel block is determined based on an area of each pixel block and a quantity of pixels comprised in each pixel block; and
compressing the first image based on a plurality of sub bit rates of the plurality of pixel blocks.

2. The method according to claim 1, wherein determining the sub bit rate of each pixel block comprises:
determining a picture quality level of each pixel block based on the area of each pixel block and the quantity of the pixels comprised in each pixel block, wherein the picture quality level represents a degree of dispersion between luminance values corresponding to the plurality of pixels in each pixel block; and determining the sub bit rate of each pixel block based on a target bit rate of the first image and the picture quality level of each pixel block.

3. The method according to claim 2, wherein determining the picture quality level of each pixel block comprises:
determining a luminance value of each pixel in the first image;
determining a luminance variance value of the plurality of pixels comprised in each pixel block; and
determining the picture quality level of each pixel block based on the luminance variance value.

4. The method according to claim 3, wherein the picture quality level of each pixel block comprises a first level, a second level, or a third level;
the first level indicates that the luminance variance value of each pixel block is less than or equal to a first threshold;
the second level indicates that the luminance variance value of each pixel block is greater than the first threshold and less than a second threshold, wherein the second threshold is greater than the first threshold; and
the second level indicates that the luminance variance value of each pixel block is greater than or equal to the second threshold.

5. The method according to any one of claims 2 to 4, wherein different picture quality levels are respectively associated with different bit allocation weights, the picture quality level is positively correlated with the bit allocation weight, and determining the sub bit rate of each pixel block based on the target bit rate of the first image and the picture quality level of each pixel block comprises:
determining a bit allocation weight corresponding to each pixel block in the first image based on the picture quality level of each pixel block; and
determining the sub bit rate of each pixel block based on the target bit rate of the first image and the bit allocation weight corresponding to each pixel block.

6. The method according to any one of claims 1 to 5, wherein acquiring the first image to be processed comprises:
acquiring a plurality of frames of source images to be processed; and
rendering the plurality of frames of source images to obtain a plurality of frames of rendered images, wherein a rendering manner comprises performing at least one of a rendering process of a rendering application or artificial intelligence generated content AIGC, and the plurality of frames of rendered images comprise the first image.

7. The method according to claim 6, wherein the plurality of frames of source images comprise a first source image and a second source image, the first source image corresponds to the first image, the second source image is adjacent to the first source image, and a timestamp of the second source image is after a timestamp of the first source image; and
rendering the plurality of frames of source images to obtain the plurality of frames of rendered images comprises:
determining a rendering manner of each pixel block in the second source image based on the picture quality level of each pixel block in the first image, wherein corresponding rendering manners are configured for different picture quality levels, and the picture quality level is positively correlated with rendering precision of the rendering manner corresponding to the picture quality level; and
rendering the second source image in the rendering manner of each pixel block in the second source image to obtain the second image.

8. The method according to claim 6 or 7, wherein the method further comprises:
generating a bit stream based on a plurality of frames of compressed images when each of the plurality of frames of images is rendered and compressed; and
sending the bit stream.

9. An image processing apparatus, wherein the apparatus comprises:
an acquisition unit, configured to acquire a first image to be processed;
a determining unit, configured to divide the first image into a plurality of pixel blocks, and determine a sub bit rate of each pixel block, wherein each pixel block comprises a plurality of pixels in the first image, and the sub bit rate of each pixel block is determined based on an area of each pixel block and a quantity of pixels comprised in each pixel block; and
a compression unit, configured to compress the first image based on a plurality of sub bit rates of the plurality of pixel blocks.

10. An image processing system, comprising a terminal device and a server, wherein
the terminal device is configured to:
send, to the server, a request for acquiring a bit stream, wherein the request comprises a plurality of consecutive frames of images; and
the server is configured to:
perform rendering in response to the request to obtain the plurality of frames of images;
divide each frame of image in the plurality of frames of images into a plurality of pixel blocks, and determine a sub bit rate of each pixel block, wherein each pixel block comprises a plurality of pixels in each frame of image, and the sub bit rate of each pixel block is determined based on an area of each pixel block and a quantity of pixels comprised in each pixel block;
compress each frame of image in the plurality of frames of images based on a plurality of sub bit rates of the plurality of pixel blocks;
generate a bit stream based on a plurality of frames of compressed images; and
send the bit stream to the terminal device.

11. A server, wherein the server comprises a memory and a plurality of processors, the memory is coupled to the processors, the memory stores computer program code, the computer program code comprises computer instructions, and when the computer instructions are executed by the processors, the server is enabled to perform the method according to any one of claims 1 to 8.

12. A computer-readable storage medium, wherein the computer-readable storage medium stores instructions, and when the instructions are run on a computer, the computer is enabled to perform the method according to any one of claims 1 to 8.
